# EUROPEAN PATENT SPECIFICATION

(11) **EP 0 798 319 B1**
(45) Date of publication and mention of the grant of the patent: **02.11.2000**
(21) Application number: 96103004.6
(22) Date of filing: 28.02.1996
(51) Int. Cl.: C08F 214/18, C08F 259/08

(54) **Elastic fluorohydrocarbon resin and method of producing same**
Elastisches fluorkohlenwasserstoff-enthaltendes Harz und Verfahren zu seiner Herstellung
Résine élastique hydrocarbonée et fluorée et sa méthode de préparation

(43) Date of publication of application: 01.10.1997
(73) Proprietor: CENTRAL GLASS COMPANY, LIMITED, Yamaguchi 755 (JP)
(72) Inventor: Kawashima, Chikashi, Kawagoe-shi, Saitama 350-11 (JP); Ishihara, Akira, Kawagoe-shi, Saitama 350-11 (JP); Kawamura, Katunori, Kawagoe-shi, Saitama 350-11 (JP); Minegishi, Seiiti, Kawagoe-shi, Saitama 350-11 (JP)
(74) Representative: Finsterwald, Manfred, Dipl.-Ing., Dipl.-Wirtsch.-Ing.

(56) References cited:
- GB-A- 2 187 467
- US-A- 4 472 557
- US-A- 5 182 342
- DATABASE "CHEMICAL ABSTRACTS" (HOST: STN): abs. 116: 129 967, Colombus, OH, USA; & JP-A-02 269 008(CENTRAL GLASS CO., LTD) 29 November 1991 XP002003332
- DATABASE "CHEMICAL ABSTRACTS" (HOST: STN); abs. 119: 204 183, Colombus, OH, USA; & JP-A-05 194 625 (CENTAL GLASS CO., LTD) 3 August 1993 XP002003333

## Description

### BACKGROUND OF THE INVENTION

The present invention relates to a polymerization method for producing a fluorine-containing elastomeric polymer serving as a trunk polymer in graft copolymerization for producing an elastic fluorohydrocarbon resin.

There are various fluorine-containing crystalline polymers which serve as synthetic resins and have wide application by reason of their characteristic properties attributed to the presence of C-F bond, such as good weather resistance, good chemical resistance and good heat resistance. However, these crystalline resins arc unsuited to some uses wherein elasticity or flexibility of the employed resin is a matter of importance, as in the cases of pipes, gaskets, sealing elements, etc.

Where elasticity or flexibility is required besides the favorable properties of fluorohydrocarbon resins it is usual to use fluoroelastomer. However, fluoroelastomers fully exhibit their characteristic physical properties and particularly dynamic properties only after completion of a cross-linking process including the steps of kneading the fluoroelastomer in unvalcanized state with the addition of a cross-linking agent, fillers and stabilizers and of subjecting the kneaded rubber to a heat treatment to accomplish cross-linking. It is inevitable, therefore, that molding of fluoroelastomer requires more complicated operations than molding of crystalline fluorohydrocarbon resins, and often restrictions are placed on the shapes of the fluoroelastomer articles. Besides, fluoroelastomers after the cross-linking process can hardly be remelted for the purpose of additional processing or working.

To obtain a fluorine-containing resin which has a sufficient elasticity but does not need any cross-linking treatment, it has been tried to copolymerize a fluorine-containing monomer that is capable of providing a crystalline polymer having a relatively low glass transition temperature with a different monomer that is capable of sufficiently lowering the degree of crystallinity of the resultant copolymer. However, copolymers obtained by this method generally become lower in melting temperature and, hence, in the upper boundary of the temperature ranges in which the respective copolymers are practicable. Besides, the copolymers tend to undergo considerable changes in the modulus of elasticity with changes in temperature within the aforementioned ranges.

Also it has been tried to obtain a desirable resin by blending a crystalline fluorohydrocarbon resin with either a plasticizer or an elastic polymer. In practice, however, not so many kinds of plasticizers and polymers are known as sufficiently high in mutual solubility with crystalline fluorohydrocarbon polymers. Even when a blending material relatively high in the mutual solubility can be used, often it is impossible to use a desirably large amount of the blending material without adversely influencing the properties of the blended resin compositions. Furthermore, the blended resin compositions are liable to locally remain in a heterogeneously mixed state and, therefore, fail to fully exhibit the expected physical properties.

U.S. Patent No. 4,472,557 corresponding to JP-A-58-206615 discloses an elastic fluorohydrocarbon resin and a method of producing the same. In this method, a fluorine-containing elastomeric polymer is graft-copolymerized with a fluorine-containing crystalline polymer in 1,1,2-trichlorotrifluoroethane. One of the elastomeric and crystalline polymers, that is, a trunk polymer, is prepared by copolymerizing at least one fluorine-containing monomer with at least one unsaturated monomer that has peroxy bond. The thus prepared elastomeric or crystalline polymer is washed and then dried in vacuum prior to the graft copolymerization.

JP-A-3-269008 discloses a modification of the method of U.S. Patent No. 4,472,557. In this modification, the graft copolymerization is conducted in a solvent mixture of a good solvent capable of dissolving the fluorine-containing elastomeric polymer and a bad solvent not capable of dissolving the fluorine-containing elastomeric polymer. Examples of the good solvent are ketones, esters and chlorine-containing compounds such as 1,1,2-trichloro-1,2,2-trifluoroethane. Examples of the bad solvent are alcohols (e.g., t-butanol) and saturated hydrocarbons.

JP-A-1-292013 discloses another modification of the method of U.S. Patent No. 4,472,557. In this modification, the graft copolymerization of a fluorine-containing elastomeric copolymer which is in the form of latex is conducted by redox polymerization in water.

It is generally known that an unsaturated peroxide alone is extremely unstable and thus liable to explode by heat, impact, and the like. However, if such monomer is dissolved in a solvent, it can be safely stored and handled with usual care. As solvents for dissolving unsaturated peroxides, inert solvents such as 1,1,2-trichlorotrifluoroethane and hydrocarbons such as toluene and isoparaffin are generally used. However, the use of 1,1,2-trichlorotrifluoroethane, causing the ozone-layer depletion, is greatly limited, and thus a demand for an alternative to 1,1,2-trichlorotrifluoroethane has been increasing. On the other hand, when the above-mentioned unsaturated peroxide dissolved in a hydrocarbon is used for producing the trunk polymer, the polymerization may terminate at an early stage due to the chain transfer reaction of the radicals of the polymerization initiator or of the monomer, to the solvent. As a consequence, the trunk polymer may become substantially lowered in yield or in molecular weight.

It is general to add various stabilizers to resins for providing the resins with thermal stability. However, if these stabilizers are added to fluororesins, this may cause the fluororesins to have stains or to become inferior in mechanical and chemical characteristics. It has been tried to add various stabilizers to an elastic fluorohydrocarbon resin prepared in accordance with the method of U.S. Patent 4,472,557, for improving thermal stability of this resin, without damaging mechanical and chemical characteristics thereof. However, this could not lead a good result.

### SUMMARY OF THE INVENTION

It is an object of the present invention to provide a method of producing a fluorine-containing elastomeric polymer in good yields, said process being less harmful to the environment.

It is another object of the present invention to provide a method of producing a fluorohydrocarbon resin that has elasticity and retains favorable properties (e.g., good thermal stability) which are characteristic of known fluorohydrocarbon resins.

An elastic fluorohydrocarbon resin produced according to the invention is a copolymer comprising a first segment which comprises a fluorine-containing elastomeric polymer and a second segment which comprises a fluorine-containing crystalline polymer. The second segment is at least partly grafted to the first segment in this resin. The fluorine-containing elastomeric polymer serving as the first segment has a glass transition temperature below room temperature and a peroxy bond capable of decomposition during graft copolymerization. The fluorine-containing crystalline polymer serving as the second segment has a melting temperature not lower than 130 °C.

The fluorine-containing elastomeric polymer serves as a trunk polymer in graft copolymerization for producing the elastic fluorohydrocarbon resin and is produced by the following first method.

The first method for producing the fluorine-containing elastomeric polymer serving as a trunk polymer comprises the steps of:
(a) dissolving at least one first monomer having (i) at least one double bond and (ii) at least one peroxy bond, in a first solvent to prepare a first solution, said first solvent being at least one selected from the group consisting of a carboxylic ester of t-butanol, methylene chloride, 1,1,1-trichloroethane, and first, second, third and fourth compounds which are respectively represented by the following formulas of (1), (2), (3) and (4) (hereinafter referred to as the first compound (1), the second compound (2), the third compound (3), and the fourth compound (4)); and
(b) conducting a copolymerization of said first monomer, which is dissolved in said first solution, with at least one second fluorine-containing monomer being at least one selected from the group consisting of a combination of vinylidene fluoride and hexafluoropropylene, a combination of vinylidene fluoride, hexafluoropropylene and tetrafluoroethylene, a combination of vinylidene fluoride and chlorotrifluoroethylene, a combination of tetrafluoroethylene and propylene, a combination of tetrafluoroethylene and a fluorine-substituted vinyl ether, and a combination of a conjugated diene and a fluorine-containing monomer, said combinations containing the monomers in such amounts, respectively, that said fluorine-containing elastomeric polymer is produced, the ratio of said first monomer to the at least one second fluorine-containing monomer being within the range from 0.05:100 to 20:100 by weight, and said peroxy bond of said first monomer having a decomposition temperature higher than the reaction temperature of said copolymerization,

   R¹COOR² (1)

   where R¹ is hydrogen atom, methyl group, or t-butyl group, R² is methyl group, ethyl group, n-propyl group, or isopropyl group, and said hydrogen atom and each hydrogen atom of these groups are optionally replaced by chlorine atom or fluorine atom,

   C₂HₓCl_{y}F_{z} (2)

   where each of x, y and z is an integer from 1 to 4, and x+y+z = 6,

   C₃HₓCl_{y}F_{z} (3)

   where each of x, y and z is an integer from 1 to 6, and x+y+z = 8,

   C₄HₓCl_{y}F_{z} (4)

   where each of x, y and z is an integer from 1 to 8, and x+y+z = 10.

In the first method, the peroxy bond of the first monomer has a decomposition temperature higher than the reaction temperature of the copolymerization. Therefore, this peroxy bond is not decomposed in the copolymerization.

An unsaturated peroxide (i.e., the above-mentioned first monomer) for use in the first method well dissolves in carboxylic esters in general. The thus dissolved unsaturated peroxide is well dispersed and dissolved in a solvent for the copolymerization. However, most of carboxylic esters, if used in the first method, tend to be easily hydrolyzed in step (b) of this method. With this, the hydrolysate may be undesirably produced in the middle of the copolymerization. Furthermore, when the unsaturated peroxide dissolved in a carboxylic ester is copolymerized with the second fluorine-containing monomer, the carboxylic ester may cause the chain transfer reaction of radicals to the solvent. With this, the copolymerization may be stopped, and/or the polymerization rate may he substantially lowered.

The inventors unexpectedly found that, when the above-mentioned first solvent according to the invention is used for dissolving therein the unsaturated peroxide in the first method, the chain transfer reaction of radicals to the solvent does not occur at all or at least substantially suppressed; that the unsaturated peroxide can be stably stored in the first solution according to the invention, before the copolymerization; that the unsaturated peroxide dissolved in the first solution can be well dispersed in a solvent for the copolymerization; that step (a) of the first method does not cause any adverse effects on the yield of copolymerization, on a so-called copolymerizability between the first and second monomers, and on molecular weight of the fluorine-containing elastomeric copolymer as the trunk polymer; and that the unsaturated peroxide dissolved in the first solution readily safely undergoes copolymerization with the second fluorine-containing monomer.

An elastic fluorohydrocarbon resin according to the invention is produced by the following second method.

This method for producing the elastic fluorohydrocarhon resin comprises the steps of:
(c) providing, in a liquid medium, a dispersion of a fluorine-containing elastomeric copolymer which is prepared in accordance with the above-mentioned first method and has a peroxy bond capable of decomposition during graft copolymerization;
(d) introducing into said dispersion at least one third monomer which comprises at least one fluorine-containing monomer and which is capable of providing a crystalline polymer having a melting temperature not lower than 130 °C; and
(c) polymerizing said third monomer in said dispersion so as to cause decomposition of said peroxy bond of said elastomeric copolymer,
thereby causing at least a portion of said third monomer to undergo graft copolymerization with said elastomeric polymer.

In the invention, it is optional to suitably combine the first and second methods, for producing the elastic fluorohydrocarbon resin.

### DESCRIPTION OF THE PREFERRED EMBODIMENTS

In the invention, the unsaturated peroxide (first monomer) is not limited to a particular type. Examples of the unsaturated peroxide are t-butyl peroxymethacrylate, di(t-butyl peroxy) fumarate, t-butyl peroxycrotonate, and unsaturated peroxycarbonates such as t-butyl peroxyallylcarbonate, t-hexylperoxyallylcarbonate, 1,1,3,3-tetramethylperoxyallylcarbonate, t-butylperoxymethacrylcarbonate, 1,1,3,3-tetramethylbutylperoxymethacrylcarbonate, p-menthane peroxyallycarbonate and p-menthane peroxymethacrylcarbonate. Of these examples, t-butyl peroxyallylcarbonate is the most preferable. At least two of these may be mixed together to be used as the unsaturated peroxide in the invention.

In the first method of the invention, the unsaturated peroxide is dissolved in the first solvent in each step (a) of these methods. As stated above, the first solvent is at least one selected from the group consisting of a carboxylic ester of t-butanol, methylene chloride, 1,1,1-trichloroethane, and the first, second, third and fourth compounds (1), (2), (3) and (4). In other words, at least two selected from this group may be mixed together to prepare the first solvent.

In the first method, examples of the carboxylic ester of t-butanol as the first solvent are t-butyl formate, t-butyl acetate, t-butyl chloroacetate, t-butyl chloroformate, t-butyl trifluoroacetate, and t-butyl pivalate. Of these, t-butyl acetate is the most preferable example. At least two of these may be mixed together to be used as the first solvent. Furthermore, it is optional to add other at least one solvent to the carboxylic ester of t-butanol, as long as this optional solvent does not alter fundamental characteristics of the first solvent. Thus, a preferable example of the optional solvent is such that the degree of the chain transfer of radicals to the optional solvent is relatively small. Examples of the optional solvent are perfluoropolyethers, and fluorinated alkanes each of which is in the form of liquid within a range from about -30 °C to the copolymerization temperature, of which has a carbon atom number from 2 to 5, and of which does not have chlorine atom in the molecule.

In the first method, examples of the first compound (1) are methyl acetate, ethyl acetate, n-propyl acetate, methyl propionate, ethyl propionate, ethyl chloroacetate, methyl trifluoroacetate, ethyl trifluoroacetate, methyl pivalate, and ethyl pivalate. Examples of the second compound (2) are 1,1-dichloro-1-fluoroethane, 1-chloro-1,1-difluoroethane, 2-chloro-1,1,1-trifluorocthane, 2,2-dichloro-1,1,1-trifluoroethane, 1,2-dichloro-1,1,2-trifluoroethane, 1,1,2-trichloro-2,2-difluoroethane, and 1,1,2,2-tetrachloro-1-fluoroethane. Examples of the third compound (3) are 3,3-dichloro-1,1,1,2,2-pentafluoropropane, 1,3-dichloro-1,1,2,2,3-pentafluoropropane, 1,1-dichloro-1,2,2,3,3-pentafluoropropane, 1-chloro-1,2,2,3,3-pentafluoropropane, 1-chloro-2,2,3,3,3-pentafluoropropane, and 1-chloro-1,1,2,2,3-pentafluoropropane. Examples of the fourth compound (4) are 1-chloro-1,1,2,2,3,3,4,4-octafluorobutane, 1,1 ,-dichloro-2,2,3,3,4,4,4-heptafluorobutane, 2,2,3-trichloro-1,1,1,3,3,3-hexafluorobutane, 1,1,1-trichloro-3-trifluoromethylpropane, 1,1,2,2,3,3,4-heptachloro-4,4-difluorobutane, 1-chloro-2,2,3,3,4,4,4-heptafluorobutane, 1,2-dichloro-2,3,3,4,4,4-hexafluorobutane, 2,3-dichloro-1,1,1,4,4,4-hexachlorobutane, 1,1,1-trichloro-2,2,4,4,4-pentafluorobutane, 1,1,1,2,2-pentachloro-4,4,4-trifluorobutane, 2-chloro-1,1,1,4,4,4-hexafluorobutane, 1,3-dichloro-1,1,14,4,4-pentafluorobutane, and 1,1,1-trichloro-2,2,3,3-tetrafluorobutane. Of these examples of the first, second, third and fourth compounds, methyl acetate, ethyl acetate, methylene chloride, 1,1,1-trichloroethane, 1,1-dichloro-1-fluoroethane, 3,3-dichloro-1,1,1,2,2-pentafluoroethane, and 1,3-dichloro-1,1,2,2,3-pentafluoroethane are particularly preferable.

In the first method, the ratio of the first solvent to the unsaturated peroxide is preferably within a range from 5:95 to 95:5 and more preferably within a range from 20:80 to 50:50. It is preferable to use the first solvent in an amount as small as possible, because the first solvent itself is not necessary in the copolymerization. Therefore, it is preferable that the concentration of the unsaturated peroxide in the first solvent is as close as possible to the maximum concentration at which the unsaturated peroxide is stably dissolved in the first solvent. If the ratio is less than 5:95, the advantageous dilution effect by the first solvent may be insufficient. If the ratio is greater than 95:5, this may adversely influence the copolymerization.

In the invention, the at least one second fluorine-containing monomer for producing the fluorine-containing elastomeric polymer serving as a trunk polymer is at least one selected from the group consisting of a combination of vinylidene fluoride and hexafluoropropylene, a combination of vinylidene fluoride, hexafluoropropylene and tetrafluoroethylene, a combination of vinylidene fluoride and chlorotrifluoroethylene, a combination of tetrafluoroethylene and propylene, a combination of tetrafluoroethylene and a fluorine-substituted vinyl ether, and a combination of a conjugated diene and a fluorine-containing monomer.

In the invention, the ratio of the unsaturated peroxide to the at least one second fluorine-containing monomer is within a range from 0.05:100 to 20:100 by weight. The use of a smaller amount of unsaturated peroxide will result in insufficient efficiency in the formation of branch polymer at the subsequent graft copolymerization step, but the use of a larger amount of unsaturated peroxide is liable to inhibit the fluorine-containing trunk polymer in the final product from exhibiting its inherent properties.

In the invention, the manner of copolymerization to obtain the fluorine-containing elastomeric polymer is not particularly limited. In other words, a common copolymerization using a polymerization initiator, such as emulsion polymerization, suspension polymerization or solution polymerization, may be taken.

In the invention, it is necessary to select a polymerization initiator used in the copolymerization such that radicals are generated at a temperature lower than the decomposition temperature of the peroxy bond of the unsaturated peroxide. In other words, it is necessary to select a suitable polymerization initiator, depending on the type of unsaturated peroxide. Examples of the initiator are benzoyl peroxide, lauroyl peroxide, t-butyl hyponitrite, azobisisobutyronitrile, azobisdimethylvaleronitrile, azobiscyclohexane-carbonitrile, potassium persulfate and ammonium persulfate, each of which has an activation energy for decomposition thereof within a range from 26 to 33 kcal/mol, a combination of iron (II) salt and hydrogen peroxide, a combination of persulfate salt and sodium hydrogensulfite, a combination of cumene hydroperoxide and iron (II) salt, and a combination of benzoyl peroxide and dimethylaniline, each of which has such an activation energy within a range from 15 to 26 kcal/mol, diisopropylperoxydicarbonate and dicyclohexylperoxydicarbonate, a combination of a peroxide (e.g., hydrogen peroxide or a hydroperoxide) and an alkyl metal (e.g., triethyl aluminum, triethyl boron or diethyl zinc) and a combination of oxygen and an alkyl metal, each of which has such an activation energy of 15 kcal/mol.

In the invention, as a solvent for the polymerization, an aqueous medium which optionally contains a water soluble solvent such as alcohol is used in case of emulsion polymerization and suspension polymerization, and a solvent which hardly causes the chain transfer to the solvent is used in case of solution polymerization.

In the invention, the polymerization temperature and time vary depending on the polymerization initiator. This polymerization time is from about 1 to about 50 hr at a polymerization temperature from 0 to 90 °C. The polymerization pressure is from the atmospheric pressure to 9.8 MPa (100 kgf/cm²) and varies depending on the polymerization manner, the raw material supply manner in the polymerization, and the monomer types.

In the invention, a purified fluorine-containing elastomeric polymer serving as a trunk polymer can be obtained by removing the polymerization initiator, the solvents and the unreacted monomers from the reaction medium after the polymerization, through salting out, washing, optional drying and the like.

In the invention, the graft copolymerization according to the invention is conducted in a manner similar to that of common graft copolymerizations, except in that an initiator is not added in the invention because the peroxy bond of the trunk polymer of the invention is capable of decomposition during graft copolymerization. For example, the graft copolymerization of the invention is conducted at first by introducing the trunk polymer together with a reaction medium into a reaction vessel, using a pulverization device such as homogenizer, to provide a dispersion of the trunk polymer in a liquid medium, then by adding the at least one third monomer and an optional additive(s) used according to need, and then by polymerizing the third monomer in the dispersion for a certain time while the reaction mixture is stirred and its temperature is controlled, thereby causing at least a portion of the third monomer to undergo graft copolymerization with the trunk polymer.

In the above-mentioned second method for producing an elastic fluorohydrocarbon resin according to the invention, the solvent for the graft copolymerization may be an aqueous solvent or an organic solvent. This aqueous solvent contains less than 10 wt% of a water soluble solvent. This water soluble solvent is not limited to a particular type. Examples of the water soluble solvent are alcohols such as methanol, ethanol, n-propanol, i-propanol, n-butanol, sec-butanol and t-butanol, and ketones such as acetone, methyl ethyl ketone and methyl isobutyl ketone. Examples of the above-mentioned optional additive(s) are the chain transfer agent, the initiator decomposition accelerator, the emulsifying agent and the dispersion stabilizer.

In the second method, as to the organic solvent for the graft copolymerization, it is preferable to select a suitable solvent such that the trunk polymer suitably swells by this solvent, that the trunk polymer becomes somewhat smaller in diameter by stirring, and that the obtained graft copolymer does not swell and is easily separated by filtration. As such suitable solvent, it is preferable to use chlorofluorocarbons such as 1,1,2-trichlorotrifluoroethane and 1,1-dichlorotetrafluoroethane. However, these solvents specified as specific Freons (trade name) are limited in use. Therefore, alternative Freons may be used as the organic solvent of the invention. Of alternative Freons, it is preferable to use those having a boiling point from about 0 to about 100 °C, such as 1,1-dichloro-1-fluoroethane, 1,3-dichloro-1,1,2,2,3-pentafluoropropane and 3,3-dichloro-1,1,1,2,2-pentafluoropropane. Examples of other preferable organic solvents are a mixture of t-butanol and ethyl acetate, a mixture of t-butanol and 1,1,1-trichloroethane, a mixture of t-butanol, ethyl acetate and water, and a mixture of t-butanol, 1,1,1-trichloroethane and water.

In the invention, the at least one third monomer which is graft copolymerized with the fluorine-containing elastomeric polymer (trunk polymer) is capable of providing an crystalline polymer (branch polymer) having a melting temperature not lower than 130 °C. Such third monomer is not limited to a particular monomer. Examples of such third monomer are tetrafluoroethylene, chlorotrifluoroethylene, vinylidene fluoride and fluorine-substituted vinyl ether.

In the invention, the graft copolymerization temperature and time vary depending mainly on the type of unsaturated peroxide. The graft copolymerization is conducted preferably for a period of time from about 1 to about 50 hr and preferably at a temperature from 50 to 120 °C. The graft polymerization pressure varies depending on the polymerization manner, the raw material supply manner in the graft polymerization and the monomer types, but is usually from the atmospheric pressure to about ( 100 kgf/cm²) 9.8 MPa.

In the invention, the elastic fluorohydrocarbon resin prepared by the graft copolymerization consists essentially of one copolymer comprising : (a) a first segment which comprises a fluorine-containing elastomeric polymer having a glass transition temperature below room temperature; and (b) a second segment which comprises a fluorine-containing crystalline polymer which has a melting temperature not lower than 130 °C, wherein the second segment is at least partly grafted to the first segment.

Examples of the crystalline polymer (branch polymer) which has a melting temperature not lower than 130 °C and is prepared by the polymerization of the at least one third monomer and grafted to the fluorine-containing elastomeric polymer (trunk polymer) are polytetrafluoroethylene, polychlorotrifluoroethylene, polyvinylidene fluoride, polyvinyl fluoride, copolymers of tetrafluoroethylene and ethylene, copolymers of chlorotrifluoroethylene and ethylene, copolymers of tetrafluoroethylene and a fluorine-substituted vinyl ether, copolymers of vinylidene fluoride and tetrafluoroethylene, copolymers of vinylidene fluoride and chlorotrifluoroethylene, copolymers of vinylidene fluoride and hexafluoropropylene, copolymers of vinylidene fluoride and trifluoroethylene, copolymers of vinylidene fluoride and hexafluoroacetone, and copolymers of vinylidene fluoride, tetrafluoroethylene and hexafluoropropylene.

In the invention, the weight ratio of the branch polymer to the trunk polymer in the elastic fluorohydrocarbon resin is preferably within a range from 20:100 to 100:100 and more preferably within a range from 40:100 to 80:100. These ranges are nonlimitative ranges and adjusted depending on the aimed characteristics of the elastic fluorohydrocarbon resin. However, in view of the balance between mechanical strength of this resin and softness thereof, it is common to take the above preferable range.

A purified elastic fluorohydrocarbon resin can be obtained by removing the solvents and the unreacted monomers from the reaction medium after the graft polymerization, through salting out, washing, drying and the like.

The following examples are illustrative of the present invention, but these examples are not limitative.

Some physical properties of polymer sheets measured at 23 °C and the melt viscosity measured at 220 °C under 9.8 MPa (100 kgf/cm²) are shown in Table 1 for the samples prepared in Examples 1-4 and Referential Examples 1-4 described hereinafter.

The measurement of the respective items in Table 1 were made by the following methods.

The break strength and elongation were measured at 23 °C by a tension test method in accordance with JIS (Japanese Industrial Standard) K 6301, using AUTOGRAPH (trade name) of Shimazu Co. as a tension tester. The test pieces were of the dumbbell shape, and the tension rate was 200 mm/min.

The tensile modulus test was conducted by at first attaching a test piece having a width of 10 mm, a length of 125 mm and a thickness of 1 mm to a tensile tester in a manner to adjust the distance between two chucks to 100 mm, and then by adding an elongation rate of 10 mm/min at 23 °C. The test result was obtained as a curve in a graph showing the relationship between elongation and stress. The tensile modulus (i.e., the ratio of stress to the elongation percentage) was determined using the inclination of the initial rising portion of the curve. As elasticity of the sample increases, the value of tensile modulus becomes smaller.

The Shore hardness was measured on a laminate of four test pieces of the sheet, in accordance with ASTM-D-2240.

In the melt viscosity test, at first, a cylinder kept heated at 200 °C was charged with the graft copolymer resin, followed by a preliminary heating of the cylinder for 5 min. Then, the graft copolymer was extruded from an orifice having a diameter of 1 mm and a length of 10 mm. During the extrusion, the flow rate of the graft copolymer was measured with a flow tester of Shimazu Co. to determine the melt viscosity.

**Table 1**

| | Break Strength (kgf/cm²) MPa | Elongation at Break (%) | Elasticity (kgf/cm²) MPa | Hardness (Shore D) | Melt Viscosity (X 10⁴ P) |
|---|---|---|---|---|---|
| Example 1 | (280) 27 | 480 | (1,200) 118 | 52 | 1.2 |
| Example 2 | (210) 21 | 540 | (880) 86 | 48 | 1.5 |
| Ref. Ex. 1 | (300) 29 | 450 | (1,350) 132 | 55 | 1.3 |
| Ref. Ex. 2 | (65) 6.4 | 720 | (400) 39 | 30 | 22 |
| Ref. Ex. 3 | (380) 37 | 120 | (8,600) 843 | 80 | 0.8 |
| | | | | | |
| Example 3 | (220) 22 | 510 | (1,030) 101 | 49 | 1.1 |
| Example 4 | (230) 23 | 490 | (1,150) 113 | 52 | 1.2 |
| Ref. Ex. 4 | (300) 29 | 450 | (1,350) 132 | 55 | 1.3 |

### EXAMPLE 1

### (A) PREPARATION OF FLUORINE-CONTAINING ELASTOMERIC POLYMER

In this step (A), 900 g of pure water, 2.9 g of potassium persulfate, 2.2 g of ammonium perfluorooctanoate, 2.7 g of sodium tetraborate, 1.2 g of potassium dihydrophosphate, and 1.8 g of a t-butyl acetate solution containing 70 wt% of t-butyl peroxyallylcarbonate were introduced into a 2-liter stainless steel autoclave which was secured against pressures up to 10.1 MPa (100 atm), and, after exhausting the gas atmosphere of the autoclave, 83 g of chlorotrifluoroethylene monomer and 182 g of vinylidene fluoride monomer were additionally charged into the autoclave. The resultant mixture was subjected to radical polymerization reaction at 50 °C with continuous stirring. When the reaction temperature reached 50 °C, the autoclave inside pressure was 3.9 MPa (40 kgf/cm²). The pressure decreased from 3.9 MPa (40 kgf/cm²) as the polymerization reaction proceeded. When the pressure reached 2.9 MPa (30 kgf/cm²), the reaction temperature was increased to 60 °C. Then, when the pressure reached 0.69 MPa (7 kgf/cm²), the reaction mixture was cooled down, and at the same time the monomers were purged from the reaction mixture, thereby terminating the polymerization reaction. The period of polymerization time was about 9 hr. The reaction product had the appearance of white latex, and by a salting-out treatment it turned into a rubber-like powder. This powder was centrifuged, then washed with water, and then again centrifuged. With this, 333 g of an elastomeric copolymer powder was obtained. After the second centrifugation, the water content of the copolymer powder was measured to be 28%. The yield of the copolymer was 90.0%.

50 g of the obtained copolymer powder was dried in vacuum, then washed with n-hexane to completely remove unreacted residue of t-butyl peroxyallylcarbonate and again dried in vacuum, thereby obtaining 36 g of copolymer in the form of white powder. The DSC curve of the thus formed copolymer had an exothermic peak at 160-180 °C, which was attributed to the decomposition of peroxy bond. By DSC analysis at low temperatures, the glass transition temperature Tg of the copolymer was determined to be -25 °C. By iodimetric titration, the content of active oxygen in the copolymer was measured to be 0.039%.

### (B) PREPARATION OF ELASTIC FLUOROHYDROCARBON RESIN

In this step (B), 150 g of the above prepared copolymer having a water content of 28%, 275 g of t-butanol, and 225 g of ethyl acetate were introduced into a 1-liter stainless steel autoclave which was secured against pressures up to 50 atm. After exhausting the gas atmosphere of the autoclave, the temperature of the reaction mixture was increased to 90 °C. Then, vinylidene fluoride monomer was continuously blown into the autoclave under a pressure of 2.0 MPa (20 kgf/cm²), thereby conducting graft copolymerization for 14 hr with continuous stirring. After the copolymerization, unreacted monomers were purged from the autoclave. While water was added to the obtained slurry, t-butanol and ethyl acetate as solvents were distilled out and recovered. With this, a liquid dispersion of an elastic fluorohydrocarbon resin in water was obtained. This dispersion was centrifuged and then dried, thereby obtaining 153 g of a copolymer in the form of white powder. By DSC analysis, the melting temperature of this copolymer was found to be 163 °C. This copolymer was first kneaded by means of two 10.16 cm (4-inch) rollers which were kept heated at 180 °C, and then press-shaped into a 1 mm thick sheet having widths of 200 mm. This sheet was semitransparent and elastic and flexible.

### COMPARATIVE EXAMPLE 1

In this Comparative Example, the step (A) of Example 1 was repeated except in that the t-butyl acetate solution was replaced by a toluene solution containing 70% of t-butyl peroxyallylcarbonate and that the polymerization was conducted for 18 hr. An initial autoclave inside pressure of 3.9 MPa (40 kgf/cm²) decreased to only 3.7 MPa (38 kgf/cm²) in the polymerization. Therefore, it was found that the polymerization did not proceed sufficiently. The yield of a copolymer obtained in the step (A) was only 5.2%. Therefore, the step (B) was not conducted.

### COMPARATIVE EXAMPLE 2

In this Comparative Example, the step (A) of Example 1 was repeated except in that the t-butyl acetate solution was replaced by an isooctane solution containing 70 wt% of t-butyl peroxyallylcarbonate and that the polymerization was conducted for 18 hr. An initial autoclave inside pressure of 3.9 MPa (40 kgf/cm²) decreased to only 3.4 MPa (35 kgf/cm²) in the polymerization. Therefore, it was found that the polymerization did not proceed sufficiently. The yield of a copolymer obtained in the step (A) was only 7.3%. Therefore, the step (B) was not conducted.

### REFERENTIAL EXAMPLE 1

In this referential example, Example 1 was repeated except in that the t-butyl acetate solution was replaced by a commercial product of pure t-butylperoxyallylcarbonate having a purity of 98%. In this commercial product t-butanol and allylalcohol constitute the rest thereof. The polymerization time in the step (A) was about 9 hr. A copolymer obtained in the step (A) was found to have a glass transition temperature of -23 °C. The yield of this copolymer was 85.3%. By iodimetric titration, the content of active oxygen in the copolymer was measured to be 0.037%.

### REFERENTIAL EXAMPLE 2

A copolymer of vinylidene fluoride and chlorotrifluoroethylene as a fluororubber, KEL-F3700 (trade name) of 3M Co., was subjected to the same evaluation tests as described above.

### REFERENTIAL EXAMPLE 3

A polyvinylidene fluoride as a homopolymer of vinylidene fluoride, HYLAR460 (trade name) of AUSIMONT Co., was subjected to the same evaluation tests as described above.

### EXAMPLE 2

### (A) PREPARATION OF FLUORINE-CONTAINING ELASTOMERIC POLYMER

In this step (A), 900 g of pure water, 2.9 g of potassium persulfate, 2.2 g of ammonium perfluorooctanoate, and 1.8 g of a t-butyl acetate solution of t-butyl peroxyallylcarbonate which is the same as that in Example 1 were introduced into a 2-liter stainless steel autoclave which was secured against pressures up to 100 atm, and, after exhausting the gas atmosphere of the autoclave, the reaction mixture was subjected to radical polymerization reaction at 50 °C, while a gas mixture in which vinylidene fluoride monomer and hexafluoropropylene monomer had been mixed together in a molar ratio of 75:25 was blown into the reaction mixture. This gas mixture was added in a manner to maintain the autoclave inside pressure at 1.8 MPa (18 kgf/cm²). At the time of 6 hr after the start of the polymerization, the reaction mixture was cooled down and at the same time the unreacted monomers were purged from the reaction mixture, thereby terminating the polymerization reaction. The reaction product had the appearance of white latex, and by a salting-out treatment it turned into a white rubber-like powder. This powder was centrifuged, then washed with water, and then again centrifuged. With this, 170 g of an elastomeric copolymer powder was obtained. The DSC curve of this copolymer had an exothermic peak at 160-180 °C, which was attributed to the decomposition of peroxy bond. By DSC analysis at low temperatures, the glass transition temperature Tg of the copolymer was determined to be -19 °C. By iodimetric titration, the content of active oxygen in the copolymer was measured to be 0.042%.

### (B) PREPARATION OF ELASTIC FLUOROHYDROCARBON RESIN

In this step (B), 150 g of the above prepared copolymer and 500 g of 1,1,2-trichlorotrifluoroethane were introduced into a 1-liter stainless steel autoclave which was secured against pressures up to 5.05 MPa (50 atm). After exhausting the gas atmosphere of the autoclave, the temperature of the reaction mixture was increased to 105 °C. Then, vinylidene fluoride monomer was continuously blown into the reaction mixture under a pressure of 1.4 MPa (14 kgf/cm²), thereby conducting graft copolymerization for 16 hr. After the copolymerization, unreacted monomers were purged from the autoclave. While water was added to the thus obtained slurry, 1,1,2-trichlorotrifluoroethane used as a solvent was distilled out and then recovered. With this, a liquid dispersion of an elastic fluorohydrocarbon resin in water was obtained. This dispersion was centrifuged and then dried, thereby obtaining 240 g of a copolymer in the form of white powder. By DSC analysis, the melting temperature of this copolymer was found to be 167 °C. A sheet was prepared from this copolymer in the same manner as that in Example 4. This sheet was semitransparent and elastic and flexible.

### EXAMPLE 3

### (A) PREPARATION OF FLUORINE-CONTAINING ELASTOMERIC POLYMER

The step (A) of Example 1 was repeated except in that the t-butyl acetate solution was replaced by a methylene chloride solution containing 70 wt% of t-butyl peroxyallylcarbonate, that, when the autoclave inside pressure reached 0.78 MPa (8 kgf/cm²), in place of 0.69 MPa (7 kgf/cm²), the reaction mixture was cooled down, and that the period of polymerization time was about 10 hr in place of about 9 hr. With this, 290 g of an elastomeric copolymer powder having a water content of 28% was obtained. The yield of the copolymer was 78.8%.

36 g of a copolymer in the form of white powder was obtained from the above prepared copolymer in the same way as that in Example 1. The DSC curve of the thus formed copolymer had an exothermic peak at 160-180 °C, which was attributed to the decomposition of peroxy bond. By DSC analysis at low temperatures, the glass transition temperature Tg of the copolymer was determined to be -24 °C. By iodimetric titration, the content of active oxygen in the copolymer was measured to be 0.037%.

### (B) PREPARATION OF ELASTIC FLUOROHYDROCARBON RESIN

The step (B) of Example 1 was repeated. With this, 340 g of a copolymer in the form of white powder was obtained. By DSC analysis, the melting temperature of this copolymer was found to be 163 °C. A sheet was prepared from this copolymer in the same manner as that in Example 1. This sheet was semitransparent and elastic and flexible.

### COMPARATIVE EXAMPLE 3

In this comparative example, the step (A) of Example 3 was repeated except in that the methylene chloride solution was replaced by the toluene solution of t-butyl peroxyallylcarbonate of Comparative Example 1 and that the polymerization was conducted for 18 hr. An initial autoclave inside pressure 3.9 MPa of (40 kgf/cm²) decreased to only 3.7 MPa (38 kgf/cm²) in the polymerization. Therefore, it was found that the polymerization did not proceed sufficiently. The yield of a copolymer obtained in the step (A) was only 5.2%. Therefore, the step (B) was not conducted.

### COMPARATIVE EXAMPLE 4

In this comparative example, the step (A) of Example 3 was repeated except in that the methylene chloride solution was replaced by an isooctane solution containing 70 wt% of t-butyl peroxyallylcarbonate and that the polymerization was conducted for 18 hr. An initial autoclave inside pressure of 3.9 MPa (40 kgf/cm²) decreased to only 3.4 MPa (35 kgf/cm²) in the polymerization. Therefore, it was found that the polymerization did not proceed sufficiently. The yield of a copolymer obtained in the step (A) was only 7.3%. Therefore, the step (B) was not conducted.

### EXAMPLE 4

### (A) PREPARATION OF FLUORINE-CONTAINING ELASTOMERIC POLYMER

The step (A) of Example 3 was repeated except in that the methylene chloride solution was replaced by a 1,1-dichloro-1-fluoroethane solution containing 30 wt% of t-butyl peroxyallylcarbonate. With this, an elastomeric copolymer powder was obtained. The yield of the copolymer was 80.2%. By DSC analysis at low temperatures, the glass transition temperature Tg of the copolymer was determined to be -25 °C. By iodimetric titration, the content of active oxygen in the copolymer was measured to be 0.039%.

### (B) PREPARATION OF ELASTIC FLUOROHYDROCARBON RESIN

The step (B) of Example 1 was repeated. With this, a copolymer in the form of white powder was obtained. A sheet was prepared from this copolymer in the same manner as that in Example 4. This sheet was semitransparent and elastic and flexible.

### REFERENTIAL EXAMPLE 4

In this Referential Example, Example 3 was repeated except in that the methylene chloride solution was replaced by a commercial product of pure t-butylperoxyallylcarbonate which is the same as that in Referential Example 1. The polymerization time in the step (A) was about 9 hr. A copolymer obtained in the step (A) was found to have a glass transition temperature of -23 °C. The yield of this copolymer was 85.3%. By iodimetric titration, the content of active oxygen in the copolymer was measured to be 0.037%.

## Claims

1. A method of producing a fluorine-containing elastomeric polymer having a glass transition temperature below room temperature and a peroxy bond, said method comprising the steps of:
(a) dissolving at least one first monomer having (i) at least one double bond and (ii) at least one peroxy bond, in a first solvent to prepare a first solution, said first solvent being at least one selected from the group consisting of a carboxylic ester of tertiary butanol, methylene chloride, 1,1,1-trichloroethane, and first, second, third and fourth compounds which are respectively represented by the following formulas of (1), (2), (3) and (4); and
(b) conducting a copolymerization of said first monomer, which is dissolved in said first solution, with at least one second fluorine-containing monomer being at least one selected from the group consisting of a combination of vinylidene fluoride and hexafluoropropylene, a combination of vinylidene fluoride, hexafluoropropylene and tetrafluoroethylene, a combination of vinylidene fluoride and chlorotrifluoroethylene, a combination of tetrafluoroethylene and propylene, a combination of tetrafluoroethylene and a fluorine-substituted vinyl ether, and a combination of a conjugated diene and a fluorine-containing monomer, said combinations containing the monomers in such amounts, respectively, that said fluorine-containing elastomeric polymer is produced, the ratio of said first monomer to the at least one second fluorine-containing monomer being within the range from 0.05:100 to 20:100 by weight, and said peroxy bond of said first monomer having a decomposition temperature higher than the reaction temperature of said copolymerization,
R¹COOR² (1)
where R¹ is hydrogen atom, methyl group, or t-butyl group, R² is methyl group, ethyl group, n-propyl group, or isopropyl group, and said hydrogen atom and each hydrogen atom of these groups are optionally replaced by chlorine atom or fluorine atom,
C₂HₓCl_{y}F_{z} (2)
where each of x, y and z is an integer from 1 to 4, and x+y+z = 6,
C₃HₓCl_{y}F_{z} (3)
where each of x, y and z is an integer from 1 to 6, and x+y+z = 8,
C₄HₓCl_{y}F_{z} (4)
where each of x, y and z is an integer from 1 to 8, and x+y+z = 10.

2. A method according to Claim 1, wherein said first solvent is said carboxylic ester of tertiary butanol.

3. A method according to Claim 2 , wherein said carboxylic ester of tertiary butanol is at least one selected from the group consisting of t-butyl formate, t-butyl acetate, t-butyl chloroacetate, t-butyl chloroformate, t-butyl trifluoroacetate, and t-butyl pivalate.

4. A method according to Claim 1, wherein said first solvent is one selected from the group consisting of said methylene chloride, said 1,1,1-trichloroethane, and said first, second, third and fourth compounds.

5. A method according to Claim 4, wherein said first compound is at least one selected from the group consisting of methyl acetate, ethyl acetate, n-propyl acetate, methyl propionate, ethyl propionate, ethyl chloroacetate, methyl trifluoroacetate, ethyl trifluoroacetate, methyl pivalate, and ethyl pivalate.

6. A method according to Claim 4, wherein said second compound is at least one selected from the group consisting of 1,1-dichloro-1-fluoroethane, 1-chloro-1,1-difluoroethane, 2-chloro-1,1,1-trifluoroethane, 2,2-dichloro-1,1,1-trifluoroethane, 1,2-dichloro-1,1,2-trifluoroethane, 1,1,2-trichloro-2,2-difluoroethane, and 1,1,2,2-tetrachloro-1-fluoroethane.

7. A method according to Claim 4, wherein said third compound is at least one selected from the group consisting of 3,3-dichloro-1,1,1,2,2-pentafluoropropane, 1,3-dichloro-1,1,2,2,3-pentafluoropropane, 1,1-dichloro-1,2,2,3,3-pentafluoropropane, 1-chloro-1,2,2,3,3-pentafluoropropane, 1-chloro-2,2,3,3,3-pentafluoropropane, and 1-chloro-1,1,2,2,3-pentafluoropropane.

8. A method according to Claim 4 , wherein said fourth compound is at least one selected from the group consisting of 1-chloro-1,1,2,2,3,3,4,4-octafluorobutane, 1,1,-dichloro-2,2,3,3,4,4,4-heptafluorobutane, 2,2,3-trichloro-1,1,1,3,3,3-hexafluorobutane, 1,1,1-trichloro-3-trifluoromethylpropane, 1,1,2,2,3,3,4-heptachloro-4,4-difluorobutane, 1-chloro-2,2,3,3,4,4,4-heptafluorobutane, 1,2-dichloro-2,3,3,4,4,4-hexafluorobutane, 2,3-dichloro-1,1,1,4,4,4-hexachlorobutane, 1,1,1-trichloro-2,2,4,4,4-pentafluorobutane, 1,1,1,2,2-pentachloro-4,4,4-trifluorobutane, 2-chloro-1,1,1,4,4,4-hexafluorobutane, 1,3-dichloro-1,1,14,4,4-pentafluorobutane, and 1,1,1-trichloro-2,2,3,3-tetrafluorobutane.

9. A method according to Claim 1 , wherein said at least one first monomer is selected from the group consisting of t-butyl peroxymethacrylate, di(t-butyl peroxy)fumarate, t-butyl peroxycrotonate, t-butyl peroxyallylcarbonate, t-hexylperoxyallylcarbonate, 1,1,3,3-tetramethylperoxyallylcarbonate, t-butylperoxymethacrylcarbonate, 1,1,3,3-tetramethylbutylperoxymethacrylcarbonate, p-menthane peroxyallycarbonate, and p-menthane peroxymethacrylcarbonate.

10. A method of producing an elastic fluorohydrocarbon resin, said method comprising the steps of:
(c) providing, in a liquid medium, a dispersion of a fluorine-containing elastomeric copolymer which is prepared in accordance with said method of claim 1 and has a peroxy bond capable of decomposition during graft copolymerization;
(d) introducing into said dispersion at least one third monomer which comprises at least one fluorine-containing monomer and which is capable of providing a crystalline polymer having a melting temperature not lower than 130 °C; and
(e) polymerizing said third monomer in said dispersion so as to cause decomposition of said peroxy bond,
thereby causing at least a portion of said third monomer to undergo graft copolymerization with said elastomeric polymer.

11. A method according to Claim 10, wherein said crystalline polymer is at least one selected from the group consisting of polytetrafluoroethylene, polychlorotrifluoroethylene, polyvinylidene fluoride, polyvinyl fluoride, copolymers of tetrafluoroethylene and ethylene, copolymers of chlorotrifluoroethylene and ethylene, copolymers of tetrafluoroethylene and a fluorine-substituted vinyl ether, copolymers of vinylidene fluoride and tetrafluoroethylene, copolymers of vinylidene fluoride and chlorotrifluoroethylene, copolymers of vinylidene fluoride and hexafluoropropylene, copolymers of vinylidene fluoride and trifluoroethylene, copolymers of vinylidene fluoride and hexafluoroacetone, and copolymers of vinylidene fluoride, tetrafluoroethylene and hexafluoropropylene.

## Patentansprüche

1. Verfahren zur Herstellung eines fluorhaltigen, elastomeren Polymers mit einer Glasübergangstemperatur unter Raumtemperatur und einer Peroxybindung, wobei das Verfahren die Schritte umfaßt:
(a) Lösen wenigstens eines ersten Monomers mit (i) wenigstens einer Doppelbindung und (ii) wenigstens einer Peroxybindung in einem ersten Lösemittel, um eine erste Lösung herzustellen, wobei das erste Lösemittel wenigstens eines ist, ausgewählt aus der Gruppe, bestehend aus einem Carbonsäureester von tertiärem Butanol, Methylenchlorid, 1,1,1-Trichlorethan und ersten, zweiten, dritten und vierten Verbindungen, die jeweils durch die folgenden Formeln (1), (2), (3) und (4) wiedergegeben sind; und
(b) Durchführen einer Copolymerisation des ersten Monomers, das in der ersten Lösung gelöst ist, mit wenigstens einem zweiten fluorhaltigen Monomeren, das wenigstens eines ist, ausgewählt aus der Gruppe, bestehend aus einer Kombination von Vinylidenfluorid und Hexafluorpropylen, einer Kombination von Vinylidenfluorid, Hexafluorpropylen und Tetrafluorethylen, einer Kombination von Vinylidenfluorid und Chlortrifluorethylen, einer Kombination von Tetrafluorethylen und Propylen, einer Kombination von Tetrafluorethylen und einem fluorsubstituiertem Vinylether und einer Kombination von einem konjugierten Dien und einem fluorhaltigen Monomeren, wobei die Kombinationen die Monomere jeweils in solchen Mengen enthalten, daß das fluorhaltige, elastomere Polymer hergestellt wird, das Gewichtsverhältnis des ersten Monomers zu dem wenigstens zweiten fluorhaltigen Monomeren im Bereich von 0,05:100 bis 20:100 liegt, und die Peroxybindung des ersten Monomers eine Zersetzungstemperatur hat, die höher als die Reaktionstemperatur der Copolymerisation ist,
R¹COOR² (1)
in der R¹ das Wasserstoffatom, die Methylgruppe oder die t-Butylgruppe bedeutet, R² die Methylgruppe, die Ethylgruppe, die n-Propylgruppe oder die Isopropylgruppe bedeutet und das Wasserstoffatom und jedes Wasserstoffatom dieser Gruppe gegebenenfalls durch das Chloratom oder Fluoratom ersetzt sein kann,
C₂HₓCl_{y}F_{z} (2)
in der jedes x, y und z eine ganze Zahl von 1 bis 4 ist, und x+y+z = 6 ist,
C₃HₓCl_{y}F_{z} (3)
in der jedes x, y und z eine ganze Zahl von 1 bis 6 ist, und x+y+z = 8 ist.
C₄HₓCl_{y}F_{z} (4)
in der jedes x, y und z eine ganze Zahl von 1 bis 8 ist, und x+y+z = 10 ist.

2. Verfahren nach Anspruch 1, bei dem das erste Lösemittel der Carbonsäureester von tertiärem Butanol ist.

3. Verfahren nach Anspruch 2, bei dem der Carbonsäureester von tertiärem Butanol wenigstens einer ist aus der Gruppe t-Butylformiat, t-Butylacetat, t-Butylchloracetat, t-Butylchlorformiat, t-Butyltrifluoracetat und t-Butylpivalat.

4. Verfahren nach Anspruch 1, bei dem das erste Lösemittel eines aus der Gruppe Methylenchlorid, 1,1,1-Trichlorethan und erster, zweiter, dritter und vierter Verbindung ist.

5. Verfahren nach Anspruch 4, bei dem die erste Verbindung wenigstens eine ist aus der Gruppe Methylacetat, Ethylacetat, n-Propylacetat, Methylpropionat, Ethylpropionat, Ethylchloracetat, Methyltrifluoracetat, Ethyltrifluoracetat, Methylpivalat und Ethylpivalat.

6. Verfahren nach Anspruch 4, bei dem die zweite Verbindung wenigstens eine ist aus der Gruppe 1,1-Dichlor-1-fluorethan, 1-Chlor-1,1-difluorethan, 2-Chlor-1,1,1-trifluorethan, 2,2-Dichlor-1,1,1-trifluorethan, 1,2-Dichlor-1,1,2-trifluorethan, 1,1,2-Trichlor-2,2-difluorethan und 1,1,2,2-Tetrachlor-1-fluorethan.

7. Verfahren nach Anspruch 4, bei dem die dritte Verbindung wenigstens eine ist aus der Gruppe 3,3-Dichlor-1,1,1,2,2-pentafluorpropan, 1,3-Dichlor-1,1,2,2,3-pentafluorpropan, 1,1-Dichlor-1,2,2,3,3-pentafluorpropan, 1-Chlor-1,2,2,3,3-pentafluorpropan, 1-Chlor-2,2,3,3,3-pentafluorpropan und 1-Chlor-1,1,2,2,3-pentafluorpropan.

8. Verfahren nach Anspruch 4, bei dem die vierte Verbindung wenigstens eine ist aus der Gruppe 1-Chlor-1,1,2,2,3,3,4,4-octafluorbutan, 1,1-Dichlor-2,2,3,3,4,4,4-heptafluorbutan, 2,2,3-Trichlor-1,1,1,3,3,3-hexafluorbutan, 1,1,1-Trichlor-3-trifluormethylpropan, 1,1,2,2,3,3,4-Heptachlor-4,4-difluorbutan, 1-Chlor-2,2,3,3,4,4,4-heptafluorbutan, 1,2-Dichlor-2,3,3,4,4,4-hexafluorbutan, 2,3-Dichlor-1,1,1,4,4,4-hexafluorbutan, 1,1,1-Trichlor-2,2,4,4,4-pentafluorbutan, 1,1,1,2,2-Pentachlor-4,4,4-trifluorbutan, 2-Chlor-1,1,1,4,4,4-hexafluorbutan, 1,3-Dichlor-1,1,4,4,4-pentafluorbutan und 1,1,1-Trichlor-2,2,3,3-tetrafluorbutan.

9. Verfahren nach Anspruch 1, bei dem das wenigstens eine erste Monomer aus der Gruppe t-Butylperoxymethacrylat, Di(t-butylperoxy)fumarat, t-Butylperoxycrotonat, t-Butylperoxyallylcarbonat, t-Hexylperoxyallylcarbonat, 1,1,3,3-Tetramethylperoxyallylcarbonat, t-Butylperoxymethacrylcarbonat, 1,1,3,3-Tetramethylbutylperoxymethacrylcarbonat, p-Menthanperoxyallylcarbonat und p-Menthanperoxymethacrylcarbonat ausgewählt ist.

10. Verfahren zur Herstellung eines elastischen Fluorkohlenwasserstoffharzes, wobei das Verfahren die Schritte umfaßt:
(c) Herstellen einer Dispersion eines fluorhaltigen, elastomeren Copolymers, das gemäß dem Verfahren von Anspruch 1 hergestellt ist und eine Peroxybindung aufweist, die während der Pfropfcopolymerisation zur Zersetzung fähig ist, in einem flüssigen Medium;
(d) Einführen wenigstens eines dritten Monomers in die Dispersion, das wenigstens ein fluorhaltiges Monomer ist und fähig ist, ein kristallines Polymer mit einer Schmelztemperatur nicht unter 130°C zu bilden; und
(e) Polymerisieren des dritten Monomers in der Dispersion, so daß die Zersetzung der Peroxybindung herbeigeführt wird, wodurch wenigstens ein Teil des dritten Monomers einer Pfropfcopolymerisation mit dem elastomeren Polymer unterzogen wird.

11. Verfahren nach Anspruch 10, worin das kristalline Polymer wenigstens eines ist, aus der Gruppe Polytetrafluorethylen, Polychlortrifluorethylen, Polyvinylidenfluorid, Polyvinylfluorid, Copolymere von Tetrafluorethylen und Ethylen, Copolymere von Chlortrifluorethylen und Ethylen, Copolymere von Tetrafluorethylen und einem fluorsubstituiertem Vinylether, Copolymere von Vinylidenfluorid und Tetrafluorethylen, Copolymere von Vinylidenfluorid und Chlortrifluorethylen, Copolymere von Vinylidenfluorid und Hexafluorpropylen, Copolymere von Vinylidenfluorid und Trifluorethylen, Copolymere von Vinylidenfluorid und Hexafluoraceton und Copolymere von Vinylidenfluorid, Tetrafluorethylen und Hexafluorpropylen.

## Revendications

1. Procédé de préparation d'un polymère élastomère fluoré ayant une température de transition vitreuse au-dessous de la température ambiante et une liaison peroxy, ledit procédé comprenant les étapes consistant à :
(a) dissoudre au moins un premier monomère ayant (i) au moins une liaison double et (ii) au moins une liaison peroxy dans un premier solvant pour préparer une première solution, ledit premier solvant étant au moins un solvant choisi dans l'ensemble constitué par un ester carboxylique de butanol tertiaire, le chlorure de méthylène, le 1,1,1-trichloroéthane et des premier, second, troisième et quatrième composés qui sont représentés respectivement par les formules (1), (2), (3) et (4) suivantes ; et
(b) effectuer une copolymérisation dudit premier monomère, qui est dissous dans ladite première solution, avec au moins un second monomère fluoré qui est au moins un monomère choisi dans l'ensemble constitué par une combinaison de fluorure de vinylidène et d'hexafluoropropylène, une combinaison de fluorure de vinylidène, d'hexafluoropropylène et de tétrafluoroéthylène, une combinaison de fluorure de vinylidène et de chlorotrifluoroéthylène, une combinaison de tétrafluoroéthylène et de propylène, une combinaison de tétrafluoroéthylène et d'un éther vinylique substitué par du fluor, et une combinaison d'un diène conjugué et d'un monomère contenant du fluor, lesdites combinaisons contenant respectivement les monomères en des quantités telles que ledit polymère élastomère fluoré est produit, le rapport dudit premier monomère au second monomère fluoré, au nombre d'au moins un, étant compris entre 0,05 : 100 et 20 : 100 en poids, et ladite liaison peroxy dudit premier monomère ayant une température de décomposition située au-dessus de la température de réaction de ladite copolymérisation,
R¹COOR² (1)
dans laquelle R¹ est un atome d'hydrogène, un groupe méthyle ou un groupe tertio-butyle,
R² est un groupe méthyle, un groupe éthyle, un groupe n-propyle ou un groupe isopropyle,
et ledit atome d'hydrogène ainsi que chaque atome d'hydrogène de ces groupes étant éventuellement remplacés par un atome de chlore ou par un atome de fluor,
C₂HₓCl_{y}F_{z} (2)
dans laquelle x, y et z sont chacun un nombre entier de 1 à 4, et x + y + z = 6,
C₃HₓCl_{y}F_{z} (3)
dans laquelle x, y et z sont chacun un nombre entier de 1 à 6, et x + y + z = 8,
C₄HₓCl_{y}F_{z} (4)
dans laquelle x, y et z sont chacun un nombre entier de 1 à 8, et x + y + z = 10.

2. Procédé selon la revendication 1, dans lequel ledit premier solvant est ledit ester carboxylique de butanol tertiaire.

3. Procédé selon la revendication 2, dans lequel ledit ester carboxylique de butanol tertiaire est au moins un élément choisi dans l'ensemble constitué par les formiate de tertio-butyle, acétate de tertio-butyle, chloroacétate de tertio-butyle, chloroformiate de tertio-butyle, trifluoroacétate de tertio-butyle et pivalate de tertio-butyle.

4. Procédé selon la revendication 1, dans lequel ledit premier solvant est choisi dans l'ensemble constitué par ledit chlorure de méthylène, ledit 1,1,1-trichloroéthane et lesdits premier, second, troisième et quatrième composés.

5. Procédé selon la revendication 4, dans lequel ledit premier composé est au moins un composé choisi dans l'ensemble constitué par les acétate de méthyle, acétate d'éthyle, acétate de n-propyle, propionate de méthyle, propionate d'éthyle, chloroacétate d'éthyle, trifluoroacétate de méthyle, trifluoroacétate d'éthyle, pivalate de méthyle et pivalate d'éthyle.

6. Procédé selon la revendication 4, dans lequel ledit second composé est au moins un composé choisi dans l'ensemble constitué par les 1,1-dichloro-1-fluoroéthane, 1-chloro-1,1-difluoroéthane, 2-chloro-1,1,1-trifluoroéthane, 2,2-dichloro-1,1,1-trifluoroéthane, 1,2-dichloro-1,1,2-trifluoroéthane, 1,1,2-trichloro-2,2-difluoroéthane et 1,1,2,2-tétrachloro-1-fluoroéthane.

7. Procédé selon la revendication 4, dans laquelle ledit troisième composé est au moins un composé choisi dans l'ensemble constitué par les 3,3-dichloro-1,1,1,2,2-pentafluoropropane, 1,3-dichloro-1,1,2,2, 3-pentafluoropropane, 1,1-dichloro-1,2,2,3,3-pentafluoropropane, 1-chloro-1,2,2,3,3-pentafluoropropane, 1-chloro-2,2,3,3,3-pentafluoropropane et 1-chloro-1,1,2,2,3-pentafluoropropane.

8. Procédé selon la revendication 4, dans lequel ledit quatrième composé est au moins un composé choisi dans l'ensemble constitué par les 1-chloro-1,1,2,2,3,3,4,4-octafluorobutane, 1,1-dichloro-2,2,3,3,4,4,4-heptafluorobutane, 2,2,3-trichloro-1,1,1,3,3,3-hexafluorobutane, 1,1,1-trichloro-3-trifluorométhylpropane, 1,1,2,2,3,3,4-heptachloro-4,4-difluorobutane, 1-chloro-2,2,3,3,4,4,4-heptafluorobutane, 1,2-dichloro-2,3,3,4,4,4-hexafluorobutane, 2,3-dichloro-1,1,1,4,4,4-hexachlorobutane, 1,1,1-trichloro-2,2,4,4,4-pentafluorobutane, 1,1,1,2,2-pentachloro-4,4,4-trifluorobutane, 2-chloro-1,1,1,4,4,4-hexafluorobutane, 1,3-dichloro-1,1,14,4,4-pentafluorobutane et 1,1,1-trichloro-2,2,3,3-tétrafluorobutane.

9. Procédé selon la revendication 1, dans lequel ledit premier monomère, au nombre d'au moins un, est choisi dans l'ensemble constitué par les peroxyméthacrylate de tertio-butyle, di(peroxyfumarate de tertio-butyle), peroxycrotonate de tertio-butyle, peroxyallylcarbonate de tertio-butyle, peroxyallylcarbonate de tertio-hexyle, peroxyallylcarbonate de 1,1,3,3-tétraméthyle, peroxyméthacrylcarbonate de tertio-butyle, peroxyméthacrylcarbonate de 1,1,3,3-tétraméthyle, peroxyallylcarbonate de p-menthane et peroxyméthacrylcarbonate de p-menthane.

10. Procédé de préparation d'une résine fluorohydrocarbonée élastique, ledit procédé comprenant les étapes consistant à :
(c) fournir, dans un milieu liquide, une dispersion d'un copolymère élastomère fluoré préparé conformément audit procédé de la revendication 1 et qui a une liaison peroxy capable de décomposition pendant une copolymérisation par greffage ;
(d) introduire dans ladite dispersion au moins un troisième monomère qui comprend au moins un monomère fluoré et qui est capable de fournir un polymère cristallin ayant une température de fusion d'au moins 130°C ; et
(e) polymériser ledit troisième monomère dans ladite dispersion de façon à provoquer la décomposition de ladite liaison peroxy,
amenant ainsi au moins une partie dudit troisième monomère à subir une copolymérisation par greffage avec ledit polymère élastomère.

11. Procédé selon la revendication 10, dans lequel ledit polymère cristallin est au moins un polymère choisi dans l'ensemble constitué par les polytétrafluoroéthylène, polychlorotrifluoroéthylène, fluorure de polyvinylidène, fluorure de polyvinyle, copolymères de tétrafluoroéthylène et d'éthylène, copolymères de chlorotrifluoroéthylène et d'éthylène, copolymères de tétrafluoroéthylène et d'un éther vinylique substitué par du fluor, copolymères de fluorure de vinylidène et de tétrafluoroéthylène, copolymères de fluorure de vinylidène et de chlorotrifluoroéthylène, copolymères de fluorure de vinylidène et d'hexafluoropropylène, copolymères de fluorure de vinylidène et de trifluoroéthylène, copolymères de fluorure de vinylidène et d'hexafluoroacétone et copolymères de fluorure de vinylidène, de tétrafluoroéthylène et d'hexafluoropropylène.
